# NEUE EUROPÄISCHE PATENTSCHRIFT

(11) **EP 0 433 781 B2**
(45) Veröffentlichungstag und Bekanntmachung des Hinweises auf die Entscheidung über den Einspruch: **25.02.1998**
(45) Hinweis auf die Patenterteilung: 29.09.1993
(21) Anmeldenummer: 90123390.8
(22) Anmeldetag: 06.12.1990
(51) Int. Cl.: F16K 47/02, F16K 11/074

(54) **Ventil für Sanitärarmaturen**
Valve for sanitary fittings
Valve pour armatures sanitaires

(30) Priorität: 19.12.1989 DE 3941828
(43) Veröffentlichungstag der Anmeldung: 26.06.1991
(73) Patentinhaber: FRIEDRICH GROHE AKTIENGESELLSCHAFT, D-58675 Hemer (DE)
(72) Erfinder: Pawelzik, Manfred, W-4770 Soest (DE)

(56) Entgegenhaltungen:
- DE-A- 2 937 475
- DE-C- 2 753 287
- DE-C- 3 428 286
- FR-A- 2 609 773

## Beschreibung

Die Erfindung betrifft ein Mischventil für Sanitärarmaturen mit einer Festscheibe, die zwei Einlaßöffnungen für Kalt- und Warmwasser sowie eine Auslaßöffnung enthält, und einer zur Festscheibe beweglich angeordnete Steuerscheibe, die mit wenigstens einem als Durchbruch geformten Überströmkanal versehen ist und deren von der Festscheibe abgekehrte Stirnseite von einer Abdeck- und Führungshaube gehaltert ist, wobei die Seitenwände des Überströmkanals durch die Steuerscheibe gebildet werden, während die der Festscheibe gegenüberliegende Wand des Überströmkanals von der Abdeck- und Führungshaube gebildet wird, und im Überströmkanal im Bereich der Seitenwandung senkrecht zur Dichtebene von Festscheibe und Steuerscheibe ein Siebring angeordnet ist.
Ein Ventil dieser Gattung ist aus der EP-A- 0 129 715 bekannt. Bei diesem Ventil ist ein Siebring zur Fließgeräuschreduzierung an der Seitenwandung des Überströmkanals vorgesehen, der einerseits mit abgebogenen Haltelappen im Bereich der Trennfuge zwischen Steuerscheibe und Abdeckhaube gehalten und andererseits mit einem in den Überströmkanal vorkragenden Rand versehen ist.
Diese Ausbildung des Siebrings ist relativ kompliziert und erfordert bei der Montage einen besonderen Arbeitsgang für die Einlage des Siebrings. Außerdem ist die Ausbildung des vorkragenden Randes relativ aufwendig. Aus der FR-A-2 609 773 ist ferner ein Mischventil mit einem korb- oder napfförmigen Sieb bekannt. Bei dieser Siebausbildung ist eine diagonal angeordnete Querwand vorgesehen, die in eine an der Unterseite der Abdeckhaube vorgesehene Rille eingreift.

Der Erfindung liegt daher die Aufgabe zugrunde, die Siebringausbildung bei dem im Oberbegriff des Anspruchs 1 angegebenen Ventil weiter zu verbessern.

Diese Aufgabe wird erfindungsgemäß dadurch gelöst, daß der Siebring an der Abdeck- und Führungshaube befestigt ist und ausschließlich senkrecht zur Dichtebene verläuft, wobei der Siebring um Überströmkanal so positioniert ist, daß er im Bereich der Auslaßöffnung einen Abstand zur Seitenwandung des Überströmkanals aufweist, während er im übrigen Bereich sich in unmittelbarer Nähe der Seitenwandung befindet.

Mit dieser Ausbildung wird insbesondere erreicht, daß der Siebring eine verhältnismäßig einfache Form aufweisen und ohne besondere Montagearbeitsgänge unmittelbar mit der Abdeckhaube zusammengefügt werden kann.
Weitere Ausgestaltungen der Erfindung sind in den Ansprüchen 2 bis 9 angegeben.

Ausführungsbeispiele der Erfindung sind in der Zeichnung dargestellt und werden im folgenden näher erläutert. Es zeigt
- Figur 1: eine Mischventilkapsel im Längsschnitt, wie sie als Baueinheit in Sanitärarmaturen einsetzbar ist;
- Figur 2: das Mischventil gemäß Figur 1 um 90° gedreht im Längsschnitt;
- Figur 3: das Mischventil gemäß Figur 1 in der Schnittebene III in vergrößertem Maßstab;
- Figur 4: einen Siebring gemäß Figur 1 in vergrößerter Darstellung im Seitenschnitt;
- Figur 5: den Siebring gemäß Figur 4 in Draufsicht;
- Figur 6: einen anderen Siebring für den Einsatz in einem Überströmkanal im Seitenschnitt;
- Figur 7: den Siebring gemäß Figur 6 in Draufsicht.

Bei den Ausführungsbeispielen sind der Einfachheit halber in der Zeichnung gleiche oder entsprechende Elemente mit jeweils gleichen Bezugszeichen versehen.

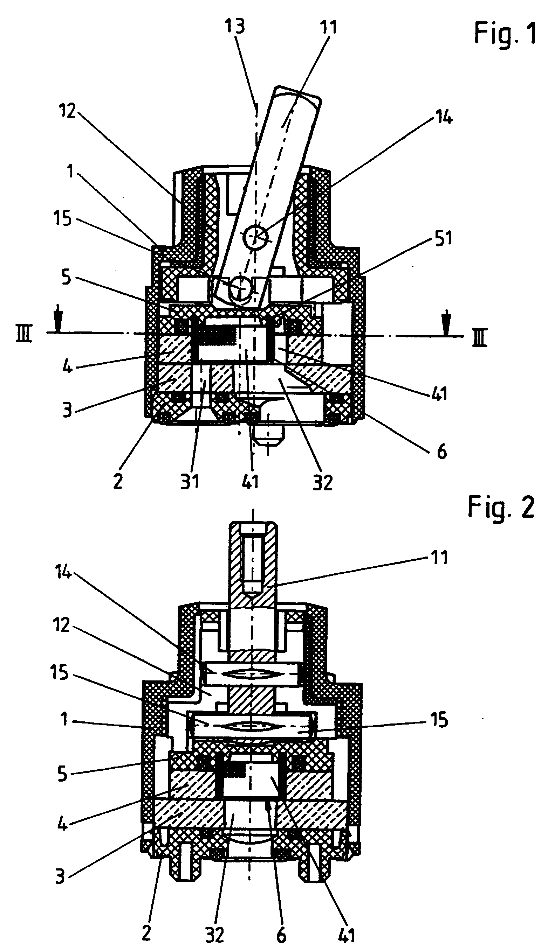

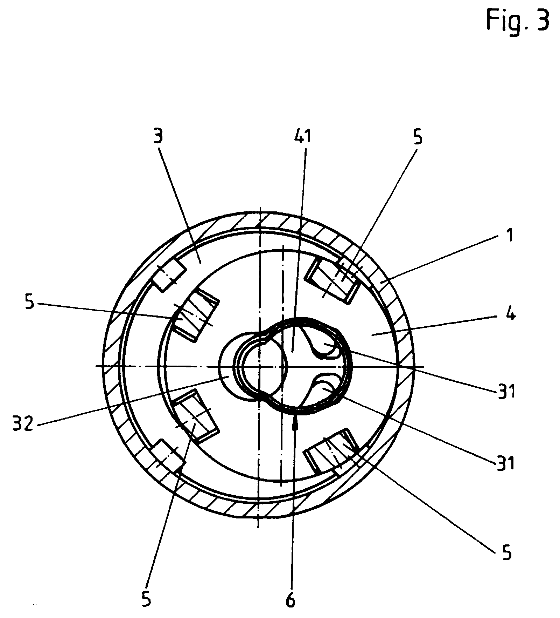

Das in den Figuren 1 bis 3 gezeigte Mischventil wird als komplette Baueinheit in Sanitärarmaturenkörper eingesetzt Als Kapsel für die Ventilelemente ist ein Ventilgehäuse 1 mit einem Boden 2 vorgesehen. In dem Ventilgehäuse 1 ist ein Stellhebel 11 in einer drehbaren Buchse 12 angeordnet, derart, daß er einerseits um eine Mittelachse 13 drehbar und um eine horizontale Achse 14 verschwenkbar gelagert ist An der inneren Stirnseite der Buchse 12 ist eine Abdeck- und Führungshaube 5 angelagert, in die der Stellhebel 11 mit einem Doppelzapfen 15 in Eingriff steht. Die Abdeck- und Führungshaube 5 ist formschlüssig, wie es insbesondere aus der Figur 3 in der Zeichnung entnehmbar ist, mit einer Steuerscheibe 4 aus Keramikmaterial verbunden. An dervon der Abdeck- und Führungshaube 5 abgekehrten Stirnseite der Steuerscheibe 4 ist eine Festscheibe 3 angeordnet, die auf der gegenüberliegenden Seite am Bodenteil 2 zur dichten Anlage gelangt. In der Festscheibe 3 sind auf einem Lochkreis angeordnete ringförmige Einlaßöffnungen 31 für die Zuführung von Kalt- und Warmwasser ausgebildet. Außerdem ist etwa konzentrisch zu den Einlaßöffnungen 31 eine etwa kreisförmige Auslaßöffnung 32 in der Festscheibe 3 vorgesehen. Die beiden Einlaßöffnungen 31 und die Auslaßöffnung 32 sind über entsprechende Öffnungen im Boden 2 mit den Zu- und Ableitungskanälen in dem in der Zeichnung nicht dargestellten Sanitärarmaturenkörper verbindbar. Zur Abdichtung sind hierbei an den Stirnseiten des Bodens 2 zu den einzelnen Öffnungen besondere Dichtringe vorgesehen.
In der Steuerscheibe 4 ist ein als Durchbruch ausgebildeter Überströmkanal 41 vorgesehen, der an der einen Seite von der Abdeck- und Führungshaube 5 verschlossen wird. Der Überströmkanal 41 ist dabei so dimensioniert, daß in Abhängigkeit von der Relativstellung zur Festscheibe 3 die Einlaßöffnungen 31 wahlweise mit der Auslaßöffnung 32 in Verbindung bringbar sind. Hierbei kann mit dem Stellhebel 11 durch eine Drehbewegung um die Mittelachse 13 das Mischungsverhältnis von Kalt- und Warmwasser bzw. die Temperatur des erzeugten Mischwassers und durch eine Schwenkbewegung um die horizontale Achse 14 die Gesamtdurchflußmenge eingestellt werden.

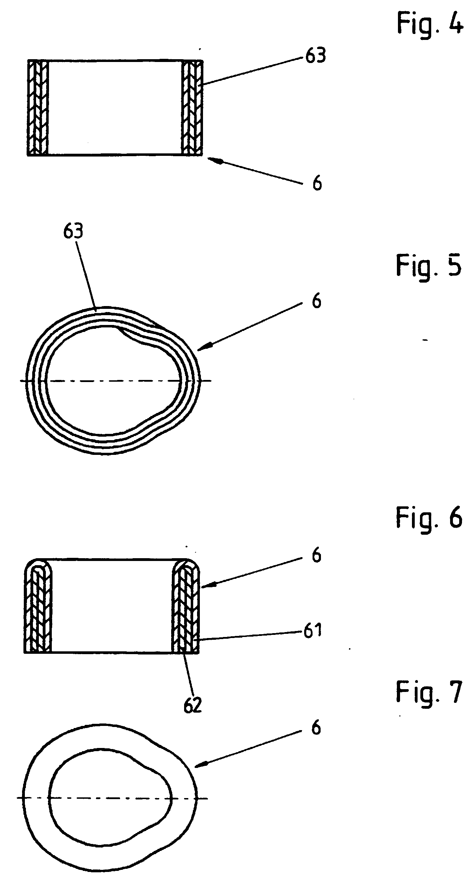

Zur Reduzierung der Fließgeräusche, die beim Durchströmen des Ventils auftreten, ist im Überströmkanal 41 senkrecht zur Dichtfläche der Festscheibe 3 und der Steuerscheibe 4 ein Siebring 6 angeordnet. Der Siebring 6 ist dabei aus drei Lagen Siebgeflecht aus einem Band 63 aufgerollt bzw. gewickelt, wie es insbesondere aus den Figuren 4 und 5 ersichtlich ist. Der Siebring 6 ist in einer Ringnut 51 reibschlüssig in der Abdeck- und Führungshaube 5 fixiert und kann dabei im Bereich der Einlaßöffnungen 31 an der Seitenwandung des Überströmkanals 41 anliegen. Die Dicke des Siebrings 6 beträgt etwa 1/3 der Dicke der ringförmigen Einlaßöffnungen 31, wobei sich die von der Abdeck- und Führungshaube 5 abgekehrte Stirnseite des Siebrings 6 bis in die unmittelbare Nähe der Dichtflächen der Steuerscheibe 4 und der Festscheibe 3 erstreckt. Im Bereich der Auslaßöffnung 32 ist dagegen der Siebring 6 mit Abstand zu der Seitenwandung des Überströmkanals 41 von ungefähr 1/4 des Durchmessers der Auslaßöffnung 32 angeordnet Mit dieser Siebausbildung wird erreicht, daß beim Öffnungsvorgang des Ventils, bei dem die Steuerscheibe 4 radial zur Festscheibe 3 verschoben wird, zunächst der schmale Einlaßquerschnitt völlig von der Stirnseite des Siebrings 6 erfaßt wird. Bei einem weiteren Verschieben in Öffnungsrichtung gelangt zunehmend auch ein vom Siebring 6 nicht mehr erfaßter Spalt zur Wirkung, wobei nunmehr der mit Abstand zur Seitenwandung des Überströmkanals 41 angeordnete Bereich des Siebrings 6 an der Auslaßöffnung 32 zunehmend eine fließgeräuschmindernde Wirkung entfaltet. Der Siebring 6 dient somit, insbesondere im Bereich der Umlenkung zur Auslaßöffnung 32, sowohl zur Zerteilung als auch als Prallwand für den Wasserstrom.
In Versuchen wurde festgestellt, daß durch diese Anordnung und Ausbildung des Siebringes 6 eine unerwartet gute Fließgeräuschreduzierung erreicht werden kann. Als Siebmaterial kann hierbei ein Geflecht mit einer Maschenweite von 0,5 mm bei einem Drahtdurchmesser von 0,32 mm eingesetzt werden.

Neben der reibschlüssigen Halterung des Siebringes 6 in der Ringnut 51 kann der Siebring 6 auch alternativ bei der Spritzgußherstellung der Abdeck- und Führungshaube 5 direkt mit eingespritzt werden.

In den Figuren 6 und 7 ist ein anderes Ausführungsbeispiel des Siebrings 6 gezeigt Hierbei sind gestanzte Ringteile 61,62 zusammengefügt, so daß vier Lagen von Siebgeflecht den Siebring 6 bilden.

## Patentansprüche

1. Mischventil für Sanitärarmaturen mit einer Festscheibe (3), die zwei Einlaßöffnungen (31) für Kalt- und Warmwasser sowie eine Auslaßöffnung (32) enthält, und einer zur Festscheibe (3) beweglich angeordnete Steuerscheibe (4), die mit wenigstens einem als Durchbruch geformten Überströmkanal (41) versehen ist und deren von der Festscheibe (3) abgekehrte Stirnseite von einer Abdeck- und Führungshaube (5) gehaltert ist, wobei die Seitenwände des Überströmkanals (41) durch die Steuerscheibe (4) gebildet werden, während die der Festscheibe (3) gegenüberliegende Wand des Überströmkanals (41) von der Abdeck- und Führungshaube (5) gebildet wird, und im Überströmkanal (41) im Bereich der Seitenwandung senkrecht zur Dichtebene von Festscheibe (3) und Steuerscheibe (4) ein Siebring (6) angeordnet ist, dadurch gekennzeichnet, daß der Siebring (6) an der Abdeck- und Führungshaube (5) befestigt ist und ausschließlich senkrecht zur Dichtebene verläuft, wobei der Siebring (6) im Überströmkanal (41) so positioniert ist, daß er im Bereich der Auslaßöffnung (32) einen Abstand zur Seitenwandung des Überströmkanals (41) aufweist, während er im übrigen Bereich sich in der unmittelbaren Nähe der Seitenwandung befindet.

2. Ventil nach Anspruch 1, dadurch gekennzeichnet, daß der Siebring (6) im Bereich der Einlaßöffnung (31) eine Dicke von etwa 1/3 bis 1/2 der Einlaßöffnung (31) aufweist.

3. Ventil nach Anspruch 1 oder 2, dadurch gekennzeichnet, daß der Siebring (6) mit der einen Stirnseite bis in die unmittelbare Nähe der Festscheibe (3) herangeführt ist.

4. Ventil nach einem der Ansprüche 1 bis 3, dadurch gekennzeichnet, daß der Siebring (6) im Bereich der Auslaßöffnung (32) einen Abstand zur Seitenwandung des Überströmkanals (41) von etwa 1/4 bis 1/2 des Durchmessers der Auslaßöffnung (32) aufweist

5. Ventil nach einem der Ansprüche 1 bis 4, dadurch gekennzeichnet, daß der Siebring (6) in einer Ringnut (51) in derAbdeck- und Führungshaube (5) gehalten ist.

6. Ventil nach einem der Ansprüche 1 bis 4, dadurch gekennzeichnet, daß der Siebring (6) bei der Herstellung der aus Kunststoff bestehenden Abdeck- und Führungshaube (5) mit einem Teilbereich mit eingespritzt ist.

7. Ventil nach einem der Ansprüche 1 bis 6, dadurch gekennzeichnet, daß der Siebring (6) aus mehreren Lagen Siebgeflecht hergestellt ist.

8. Ventil nach Anspruch 7, dadurch gekennzeichnet, daß der Siebring (6) aus drei bis fünf Lagen von einem Band (63) aus Siebgeflecht gewickelt ausgebildet ist.

9. Ventil nach Anspruch 7, dadurch gekennzeichnet, daß der Siebring (6) aus zweimal zweilagig gestanzten Ringteilen (61,62) gebildet ist, die ineinander geschachtelt sind.

## Claims

1. Mixing valve for sanitary fittings with a fixed disc (3) which contains two inlet openings (31) for cold and hot water and also an outlet opening (32), and a control disc (4) which is arranged so as to be movable with respect to the fixed disc (3), and is provided with at least one flow-over channel (41) in the form of an aperture, and of which the end face, remote from the fixed disc (3), is held by a covering and guiding cap (5), the side walls of the flow-over channel (41) being formed by means of the control disc (4), while the wall, lying opposite the fixed disc (3), of the flow-over channel (41) is formed by the covering and guiding cap (5), and in the flow-over channel (41) in the region of the side wall perpendicular to the sealing plane between the fixed disc (3) and the control disc (4) a sieve ring (6) is arranged, characterised in that the sieve ring (6) is attached to the covering and guiding cap (5) and extends exclusively perpendicularly to the sealing plane, the sieve ring (6) being positioned in the flow-over channel (41) in such a way that in the region of the outlet opening (32) it is at a distance from the side wall of the flow-over channel (41), while in the remaining region it is in the immediate vicinity of the side wall.

2. Valve according to Claim 1, characterised in that the sieve ring (6) has in the region of the inlet opening (31) a thickness of approximately 1/3rd to 1/2 of the inlet opening (31).

3. Valve according to Claim 1 or 2, characterised in that the sieve ring (6) is brought with one end face into the immediate vicinity of the fixed disc (3).

4. Valve according to one of Claims 1 to 3, characterised in that the sieve ring (6) in the region of the outlet opening (32) is at a distance from the side wall of the flow-over channel (41) of approximately 1/4 to 1/2 of the diameter of the outlet opening (32).

5. Valve according to one of Claims 1 to 4, characterised in that the sieve ring. (6) is held in an annular groove (51) in the covering and guiding cap (5).

6. Valve according to one of Claims 1 to 4, characterised in that the sieve ring (6), during the manufacture of the covering and guiding cap (5) consisting of plastics material, is integrally injection-moulded with a portion thereof.

7. Valve according to one of Claims 1 to 6, characterised in that the sieve ring (6) is produced from a plurality of layers of sieve netting.

8. Valve according to Claim 7, characterised in that the sieve ring (6) is wound from three to five layers of a strip (63) of sieve netting.

9. Valve according to Claim 7, characterised in that the sieve ring (6) is formed of two times two layered stamped annular parts (61, 62) which are nested in one another.

## Revendications

1. Soupape mélangeuse pour des robinets sanitaires, comprenant un disque fixe (3) avec deux ouvertures d'entrée (31) pour l'eau chaude et l'eau froide ainsi qu'une ouverture de sortie (32), et
• un disque de commande (4) monté de façon mobile au disque fixe (3) ayant au moins un canal de débordement (41) en forme de passage, la face de ce disque non tournée vers le disque fixe (3) étant retenue par une calotte de couverture et de guidage (5),
• les parois latérales du canal de débordement (41) étant constituées par le disque de commande (4) alors que la paroi du canal de débordement (41) opposée au disque fixe (3) est formée par la calotte de couverture et de guidage (5),
• un anneau-crépine (6) étant prévu dans le canal de débordement (41) dans la zone de la paroi latérale, perpendiculairement au plan d'étanchéité du disque fixe (3) et du disque de commande (4),
soupape caractérisée en ce que
l'anneau-crépine (6) est fixé à la calotte de recouvrement et de guidage (5), exclusivement perpendiculairement au plan d'étanchéité l'anneau-crépine (6) étant positionné dans le canal de débordement (41) pour que dans la zone de l'ouverture de sortie (32) il ait une distance par rapport à la paroi latérale du canal de débordement (41) et que la partie restante se trouve à proximité immédiate de la paroi latérale.

2. Soupape selon la revendication 1, caractérisée en ce que la rondelle-crépine (6) possède, au niveau de l'ouverture d'entrée (31), une épaisseur de l'ordre de 1/3-1/2 de l'ouverture d'entrée (31).

3. Soupape selon les revendications 1 et 2, caractérisée en ce que l'une des faces frontales de l'anneau-crépine (6) arrive à proximité immédiate du disque fixe (3).

4. Soupape selon l'une des revendications 1 à 3, caractérisée en ce que l'anneau-crépine (6) est écarté de la paroi latérale du canal de débordement (41) au niveau de l'orifice de sortie (32) d'une distance correspondant à un 1/4-1/2 du diamètre de l'orifice de sortie (32).

5. Soupape selon l'une des revendications 1 à 4, caractérisée en ce que l'anneau-crépine (6) est maintenu dans une rainure annulaire (51) dans la coiffe de recouvrement et de guidage (5).

6. Soupape selon l'une des revendications 1 à 4, caractérisée en ce que l'anneau-crépine (6) est intégré sur une partie de sa surface lors de la fabrication de la coiffe de recouvrement et de guidage (5) en matière plastique.

7. Soupape selon l'une des revendications 1 à 6, caractérisée en ce que l'anneau-crépine (6) est constitué par plusieurs couches d'un tissu formant crépine.

8. Soupape selon la revendication 7, caractérisée en ce que l'anneau-crépine (6) comprend de trois à cinq couches d'une bande (63) d'un tissu de tamis, enroulé.

9. Soupape selon la revendication 7, caractérisée en ce que l'anneau-crépine (6) est formé de deux parties d'anneau (61, 62) estampées en deux couches, et qui sont emboîtées l'une dans l'autre.
